# EUROPEAN PATENT SPECIFICATION

(11) **EP 3 604 398 B1**
(45) Date of publication and mention of the grant of the patent: **12.07.2023**
(21) Application number: 18187401.7
(22) Date of filing: 04.08.2018
(51) Int. Cl.: B29B 7/00, B29B 7/94, B29B 9/16, C08F 6/00, C08K 5/14, C08J 3/205, B29B 7/74, C08K 5/00

(54) **METHOD FOR PRODUCING HIGH HOMOGENEITY CROSSLINKABLE POLYETHYLENE**
VERFAHREN ZUR HERSTELLUNG VON HOCHHOMOGENEM VERNETZBAREN POLYETHYLEN
PROCÉDÉ PERMETTANT D'OBTENIR UN POLYÉTHYLÈNE RÉTICULABLE PRÉSENTANT UNE GRANDE HOMOGÉNÉITÉ

(43) Date of publication of application: 05.02.2020
(73) Proprietor: Petkim Petrokimya Holding Anonim Sirketi, 35801 Izmir (TR)
(72) Inventor: EZDESIR, Ayhan, Izmir (TR)
(74) Representative: Sevinç, Cenk

(56) References cited:
- EP-A1- 3 192 633
- CN-A- 101 733 855
- ES-A1- 2 247 910
- ES-B2- 2 247 910

## Description

### Technical Field

The present invention relates to production method of crosslinkable polyethylene (XLPE) to be used as an insulating material in medium-voltage cables.

### Prior Art

Crosslinkable polyethylene (XLPE) is used in a tube form, wherein it is used in insulating high voltage in pipe systems, heating and cooling systems and electrical cables in buildings. Further, it can be employed in extracting natural gas and extracting oil from see bottom, transferring chemical materials, and transportation of sewer and mud. In 21. century, XLPE has become the preferred material as a alternate to manufacturing water pipes particularly in living space compared to polyvinyl chloride, chlorinated polyvinyl chloride and copper pipes. XLPE is a polymeric insulating material used particularly in insulating the cables with medium and high voltage.

The first XLPE material was produced by means of radiating to extruded pipe with electron beam in 1930s. Said process was an expensive step, even though it was carried out until 1970s Cross-linking was developed by means of Engel Method in 1960s. A peroxide is mixed in said method before it is extruded with HDPE. Cross-linking is realized in the transition process of melted polymer throughout the long-term heating mold. Sioplas Method, in which vinyl silane compound is used, was patented in 1968 and Monosil, which is another silane-based process following this, was patented in 1974.

In the state of art, there exists no application which provides both a high homogeneity of the production method of crosslinkable polyethylene (XLPE) and fulfills its clean, fast and flexible production process.

It is mentioned in Chinese Patent Document CN101733855 from applications known in the technique that filtered melted polyethylene firstly is mixed with antioxidant and afterwards, dicumyl peroxide is extruded by feeding it to extruder, and crosslinkable polyethylene oriented for a high voltage is produced. Crosslinkable polyethylene (XLPE) is produced by feeding firstly polyethylene and antioxidant and then dicumyl peroxide to extruder. In this case, there will be a premature crosslinking. This causes XLPE materials to be processed more difficultly in the production of voltage cable. As a result thereof, extruder in the CV (continuous vulcanization) line used in producing voltage cable draws a higher current, therefore causing a more energy cost.

International patent application WO2010110559 from applications known in the technique mentions about the production of carbon-doped polyethylene composition with linear medium density which is not crosslinked for voltage cables.

Chinese Patent Document CN101585214 from applications known in the technique mentions about the preparation of crosslinkable polyethylene material by processing polyethylene with a predetermined proportion, ethylene-vinyl acetate copolymer, unsaturated silicone hydride, organo-tin compound, organic acid, antioxidant, anti-copper chemicals, lubricant and free radical absorbent agents in twin screw extruder.

US Patent Document US6284178 from applications known in the technique mentions about the production of silane-based crosslinkable polyethylene.

Chinese Patent Document CN102241848 from applications known in the technique mentions about the preparation of peroxide used for voltage cable and crosslinked insulated polyethene material by means of the "post-absorption" process. Polyethylene and antioxidant firstly are extruded, pelletized and dried by means of being mixed in the twin screw extruder. Then, dried product is mixed with crosslinking peroxide and absorption process is applied at 50 °C for 30 hours. Dried product, afterwards, is mixed with crosslinking peroxide for 5 - 200 minutes. This prolongs the processing times of extruding polyethylene with antioxidant, being pelletized and being dried and increases energy consumption. On the other hand, after peroxide feeding, mixing the product in the time intervals of 5 - 200 minutes similarly increases the processing time and energy consumption.

Chinese Patent Document CN 1632883 from applications known in the technique mentions about the production method of 110 KV class XLPE cable insulating material. Polyethylene with a high density is pelletized firstly by extruding with antioxidant. The product in a pelletized form is dried in fluid-bed dryer and then, it is mixed with dicumyl peroxide used as crosslinking agent in "melt kneader barrel" and it is dried in fluid-bed dryer after taking a granular form again and transferred to silo. In this case, the processing time is prolonged and contamination factor is increased. Further, since dicumyl peroxide is mixed in "melt kneader", this causes a premature crosslinking to exhibit. This causes XLPE materials to be processed more difficultly in the production of voltage cable. As a result thereof, extruder in the CV (continuous vulcanization) line used in producing voltage cable draws a higher current, therefore causing a more energy cost.

European patent application EP 3 192 633 A1 discloses a process for the manufacture of a cross-linkable polyethylene compound which can be used for the manufacture of insulating parts of medium voltage power cables. The process described in this document comprises the following steps: filtration of polyethylene to obtain polyethylene with a specific particle size; feeding the polyethylene to a homogenisation and absorption unit; mixing peroxide and antioxidant; feeding the peroxide and antioxidant in liquid form to the mixer; and optionally cooling and packaging the final product. The temperature at which the components are homogenised in the mixer and the amounts of antioxidant and peroxide added to the filtered polyethylene are not mentioned.

### Brief Description of the Invention

Objective of the present invention is to provide a production system and method for crosslinkable polyethylene to produce a crosslinkable polyethylene in a shorter time compared to conventional applications because it is more homogeneous, clearer and has fewer process steps.

Another objective of the present invention is to provide a production system and method for crosslinkable polyethylene allowing production prescription to be developed swiftly and economically by means of changing rapidly production parameters.

### Detailed Description of the Invention

"Production system and method for crosslinkable polyethylene" realized so as to achieve objective of the invention is shown in the accompanying Figures; wherein:
$ekil 1 - is a flowchart view of production system for the crosslinkable polyethylene subject to the invention.

The parts in the figures are enumerated as below
1. Contamination control unit
2. Contaminant separating unit
3. Automatic reactive dosing unit
4. Homogenization and absorption unit

R. Raw polyethylene
A. Antioxidant
B. Dicumyl peroxide
A+B: Antioxidant- Dicumyl peroxide liquid mixture
P. Crosslinkable Polyethylene

In the production system (100) for crosslinkable polyethylene, there exists at least on-line contamination control unit (1) which determines contaminations in the raw polyethylene (R) and is a closed and automatic system that is dust proof. According to contamination analysis carried out in said on-line contamination control unit (1), polyethylene with the contamination quantity is maximum 5-10 number of contaminants/kg and contaminats having maximum 150 µm particle size and thereunder is directed to contaminant separating unit (2) that the system comprises so as to separate one arm of 2 (two)-way automatic flow system from its contaminants. According to contamination analysis, polyethylene with contaminants having particle size over 150 µm, of which contamination quantity is more than 10 number of contaminants/kg, is discharged through another arm of 2 (two)-way valve.

Antioxidant (A) and dicumyl peroxide (B) are mixed in a predetermined amount or proportion in the automatic reactive dosing unit (3) in which dicumly peroxide (B) used to crosslink the polyethylene separated from its contaminants and antioxidant (A) used together therewith are fed separately. Liquid mixture (A+B) obtained from mixture of antioxidant (A) and dicumyl peroxide (B) are continuously fed into the automatic reactive dosing unit (3) according to the decrease in its amounts or proportions with respect to the amount or proportion used to be sustained in the predetermined amount or proportion in the automatic reactive dosing unit (3). There exist weight sensors in the automatic reactive dosing unit (3) so as to control the weight of liquid mixture (A+B). Data obtained through weight sensors are continuously processed, and antioxidant (A) and dicumyl peroxide (B) are fed from tanks into the automatic reactive dosing unit (3) according to the amount of liquid mixture (A+B) used in the system connected to antioxidant (A) and dicumyl peroxide (B) tanks. Polyethylene granulars separated from its contaminants, which comprises the density of 0.921 g / cm³ and the melt index of 2.0 g / 10 minutes, are separated into the homogenization and absorption unit (4). Polyethylene granulars in the homogenization and absorption unit (4) is here firstly conditioned to convert into crosslinkable structure. Antioxidant-dicumyl peroxide liquid mixture (A+B) are dosed onto the polyethylene granulars conditioned and the homogenizing process is applied so as to obtain a absolutely homogenized structure. Homogenized polyethylene- antioxidant- dicumyl peroxide mixture is converted into a crosslinkable structure. The final product taken from homogenization and absorption unit (4) are properly cooled and packaged according to its use field as a crosslinkable contaminants are conveyed by means of a system with eternal member moving in a perpendicular direction to the homogenization and absorption unit (4) and are ejected homogeneously at a proper speed such that they do not hit all area and surface in the homogenization and absorption unit (4) by means of a distributor that the system with eternal member comprises.

The production method of crosslinkable polyethylene (XLPE) subject to the invention is substantially to provide a crosslinkable polyethylene (P) by way of carrying out contamination control of the raw polyethylene (R) and cleaning/separating the contaminants, reactive-dosing on the conditioned polyethylene separated from contaminants of antioxidant- dicumly peroxide liquid mixture (A+B), carrying out homogenization of polyethylene- antioxidant- dicumyl peroxide liquid mixture (A+B), and fully absorbing the antioxidant- dicumyl peroxide liquid mixture (A+B) into polyethylene. Crosslinkable polyethylene (P) that is the final product is packaged by being cooled with respect to its use field.

Crosslinkable polyethylene subject to the invention is comprised of the following process steps;
- carrying out contamination examination of the polyethylene produced in the tubular reactor in on-line contamination control unit (1) that is an automatic, closed and dust proof system, transmitting the product, of which contamination examination is resulted positively, through one way of 2 (two)-way flow system into contaminant separating unit (2) and discharging the product, of which contamination examination is resulted negatively, through another way of 2 (two)-way automatic flow system out of the process,
- separating contaminants occurred in the course of carrying polyethylene in contaminant separating unit (2),
- conveying polyethylene granulars cleaned from its contaminants in homogenization and absorption unit (4) by means of a system with eternal member moving in a perpendicular direction,
- conditioning polyethylene granulars in the homogenization and absorption unit at 40 - 60 °C for 4-6 hours so as to allow and facilitate to absorb antioxidant- dicumyl liquid mixture (A+B) into polyethylene in the granular form,
- applying sintered filtering on the antioxidant- dicumyl peroxide liquid mixture (A+B) prepared to convert polyethylene granulars into crosslinkable structure under 6 bar,
- dosing homogeneously the sintered filtered antioxidant- dicumyl peroxide liquid mixture (A+B) by ejecting antioxidant-dicumyl peroxide liquid mixture (A+B) produced by using 1-3 percent of antioxidant (A) by weight and 0,1-0,5 percent of dicumyl peroxide (B) by weight under 2,5-5 bar of air pressure by means of an atomizer that exists in the homogenization and absorption unit (4) and is distributed evenly on the polyethylene granulars of which conditioning is carried out,
- completing homogenization by means of dosing utterly the antioxidant-dicumyl peroxide liquid mixture (A+B) onto polyethylene granulars, carrying and distributing polyethylene granulars charged in the homogenization and absorption unit (4) in a perpendicular direction through the cycle,
- absorbing the antioxidant- dicumyl peroxide liquid mixture (A+B) being in the polyethylene-antioxidant (A) - dicumyl peroxide (B) composition into polyethylene in the result of homogenization, obtaining a crosslinkable polyethylene (P) at 40-60 °C under 1,5-2,0 bar for 18-22 hours so as to cause polyethylene to gain a crosslinkable structure.

Polyethylene (P) obtained as a result of the process is packaged by being cooled, preferably cooled down to 25-35°C with respect to its preferred use field.

In a preferred embodiment of the invention, the anti oxidant- dicumyl peroxide liquid mixture (A+B) being dosed is fed into the homogenization and absorption unit (4) under 2,5-5 bar of pressure (pressure of liquid mixture) at 40-60 °C by means of evenly distributed atomizer in the course of dosing the antioxidant-dicumyl peroxide liquid mixture (A+B) so as to more homogeneously distribute antioxidant (A) and dicumyl peroxide (B) and shorten the process step.

In a preferred embodiment of the invention, the antioxidant-dicumyl peroxide liquid mixture (A+B) is ejected from automatic reactive dosing unit (3) by means of 2,5-5 bar of pressure that is in an opposite direction to the movement direction of polyethylene granulars and is enough to cover only polyethylene in the process step of dosing the antioxidant-dicumyl peroxide liquid mixture (A+B) to homogenization and absorption unit (4).

In embodiment of the invention, the obtained crosslinkable polyethylene is cooled down to 25- 35 °C so as to package the product of which degree of crosslinking (extracted portion) is <20 %, and of which value of methanol washing is <140 x 10⁻⁶ mg/kg (i.e. <140 ppm) according to ASTM D2765A method.

Within this scope, shrinkage test is carried out to measure its strength for the crosslinkable polyethylene (P) obtained, and in addition to this, its breaking strength and breaking strain before ageing and its breaking strength and breaking strain after ageing are calculated and compared, and in accordance with these results, changes in its breaking strength and breaking strain are calculated. Crosslinkable polyethylene obtained is resulted positively in all test that are carried out, wherein it is also resulted positively in hot tension test. Results found out by means of tests are given on Table 1.

**Table 1 - Experiments carried out for crosslinkable polyethylene obtained within the scope of the invention and results thereof**

| **Process** | **Standard** | **Measured** | **Result** |
|---|---|---|---|
| Shrinkage experiment | 130 ° C, 1 hour, Max. 4% of shrinkage | 1.7 % | positive |
| Breaking strength before ageing | Min. 1250 N/cm² | 2219 N/cm² | positive |
| Breaking strain before ageing | Min. 200 % | 526 % | positive |
| Breaking strength after ageing | 135 °C, 7x24 hour Min. 1250 N/cm² | 2299 N/cm² | positive |
| Breaking strain after ageing | 135 °C, 7x24 hour Min 200 % | 561% | positive |
| Breaking strength change | 135°C, 7x24 hour change ± 25% | % - 3,47 | positive |
| Breaking strain change | 135°C, 7x24 hour change ± 25% | % - 6,60 | positive |
| tension experiment in hot (hot-set) | under weight: Max 170% | Under weight: 45% | positive |
| | without weight Max 15% | | |
| | | Without weight: 1,2% | |

Crosslinkable polyethylene (P) can be produced cleaner in a shorter time by means of the simple method developed for production of the crosslinkable polyethylene (P) because it is more homogeneous and comprises fewer process steps compared to conventional applications. Therefore, crosslinkable polyethylene (P) obtained in the end of process is colorless. The crosslinkable polyethylene (P) that is obtained colorlessly is preferred all kind of use field, showing that it is purified from contaminants therein and there exist no contaminants during the process.

Because a homogeneous liquid mixture can be prepared by melting antioxidant (A) and dicumyl peroxide (B) together, the liquid mixture prepared can be dosed and homogenized properly on the polyethylene by means of an atomizer and a distributer having a system with eternal member, process steps are decreased and the process is completed in a shorter time. There exist fewer process steps and thus fewer apparatus used, thereby decreasing contamination potential of raw materials and thus the final product, XLPE. Further, temperature, time, peroxide concentration, peroxide/antioxidant rate, effects of types of peroxide and antioxidant that are the process parameters can be found out in a short time and thus, prescription procedure can be adopted easily. More process steps and a larger number of apparatus used in the process increase the contamination potential of raw materials that are used. Further, it also causes that there are more process steps and it takes more time to obtain the final product. Because the process parameters can be changed swiftly, it can be ensured that the production prescriptions are developed and applied rapidly and economically. This process minimizes contamination potential of the product and allows that it is produced more homogeneously, more effective and in a shorter time. Thus, changes in various production prescription and process parameters can be applied swiftly and a flexible production can be realized.

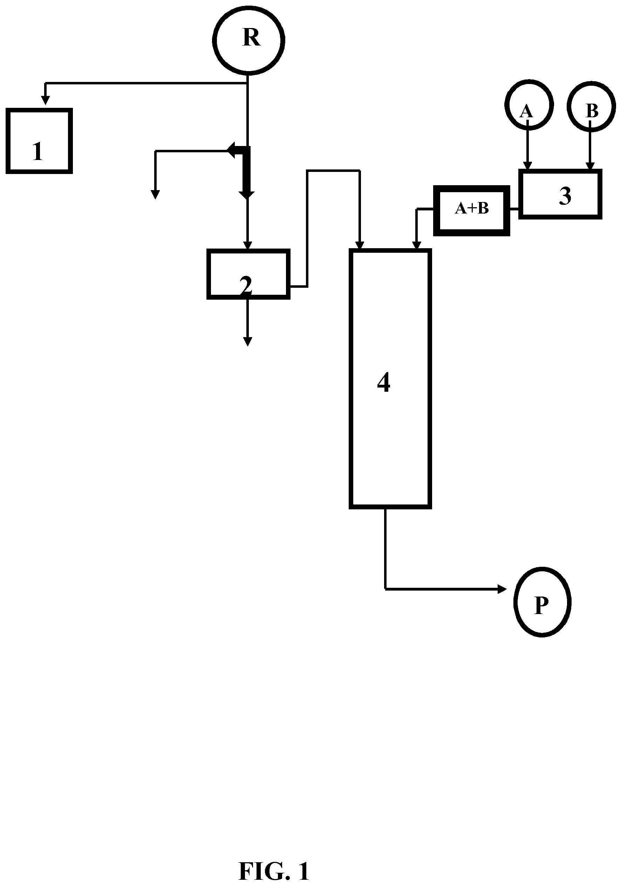

## Claims

1. Method for producing high homogeneity crosslinkable polyethylene **characterized by** comprising the following process steps;
i. carrying out contamination examination of the polyethylene produced in the tubular reactor in on-line contamination control unit (1) that is an automatic, closed and dust proof system, transmitting the product, of which contamination quantity is maximum 5-10 number of contaminants/kg and contaminants having maximum 150 µm particle size and thereunder, through one way of 2 (two)-way flow system into contaminant separating unit (2) and discharging the product, of which contamination examination is resulted negatively, through another way of 2 (two)-way automatic flow system out of the process,
ii. separating contaminants occurred in the course of carrying polyethylene in contaminant separating unit (2),
iii. conveying polyethylene granulars cleaned from its contaminants in homogenization and absorption unit (4) by means of a system with eternal member moving in a perpendicular direction,
iv. conditioning polyethylene granulars in the homogenization and absorption unit at 40 - 60 °C for 4-6 hours so as to allow and facilitate to absorb antioxidant- dicumyl liquid mixture (A+B) into polyethylene in the granular form,
v. applying sintered filtering on the antioxidant- dicumyl peroxide liquid mixture (A+B) prepared to convert polyethylene granulars into crosslinkable structure under 4-6 bar of pressure,
vi. dosing homogeneously the sintered filtered antioxidant- dicumyl peroxide liquid mixture (A+B) by ejecting antioxidant-dicumyl peroxide liquid mixture (A+B) produced by using 1-3 percent of antioxidant (A) by weight and 0,1-0,5 percent of dicumyl peroxide (B) by weight under 2,5-5 bar of air pressure by means of an atomizer that exists in the homogenization and absorption unit (4) and is distributed evenly on the polyethylene granulars of which conditioning is carried out,
vii. completing homogenization by means of carrying and distributing polyethylene granulars charged in the homogenization and absorption unit (4) in a perpendicular direction through the cycle,
viii. absorbing the antioxidant- dicumyl peroxide liquid mixture (A+B) being in the polyethylene-antioxidant (A) - dicumyl peroxide (B) composition into polyethylene in the result of homogenization, obtaining a crosslinkable polyethylene (P) at 40-60 °C under 1,5-2,0 bar for 18-22 hours so as to cause polyethylene to gain a crosslinkable structure .

2. Method for producing high homogeneity crosslinkable polyethylene (P) according to Claim 1, **characterized in that** polyethylene, of which the contaminants having maximum 150 µm particle size and thereunder contamination quantity is maximum 5-10 number of contaminants/kg in on-line contamination test, is processed so as to be separated from its contaminants.

3. Method for producing high homogeneity crosslinkable polyethylene (P) according to Claim 1, **characterized in that** it is cooled down to 25 - 35 °C so as to package the final product which converted into a crosslinkable product form, of which degree of crosslinking (extracted portion) is 20 %, and of which value of methanol washing is <140 x 10⁻⁶ mg/kg (i.e. <140 ppm) according to ASTM D2765A method

## Patentansprüche

1. Verfahren zur Herstellung von hoch homogenem, vernetzbarem Polyethylen, **dadurch gekennzeichnet, dass** es die folgenden Verfahrensschritte umfasst:
i. Durchführung einer Kontaminationsprüfung des in dem Rohrreaktor hergestellten Polyethylens in einer mitlaufenden Kontaminationskontrolleinheit (1), bei der es sich um ein automatisches, geschlossenes und staubdichtes System handelt, Durchleiten des Produkts, dessen Kontaminationsmenge maximal 5 bis 10 Verunreinigungen/kg beträgt und dessen Verunreinigungen eine maximale Teilchengröße von 150 µm aufweisen, durch einen Weg eines 2 (Zwei)-Wege-Durchflusssystems in eine Verunreinigungsabscheideeinheit (2) und Austragen des Produkts, dessen Kontaminationsprüfung negativ ausgefallen ist, durch einen anderen Weg eines automatischen 2 (Zwei)-Wege-Durchflusssystems aus dem Prozess,
ii. Abtrennung von Verunreinigungen, die bei der Beförderung von Polyethylen in der Verunreinigungsabscheideeinheit (2) entstanden sind,
iii. Fördern des von Verunreinigungen gereinigten Polyethylen-Granulats in die Homogenisierungs- und Absorptionseinheit (4) mittels eines Systems mit einem sich in einer senkrechten Richtung bewegenden ewigen Element,
iv. Konditionierung des Polyethylen-Granulats in der Homogenisierungs- und Absorptionseinheit bei 40 - 60 °C für 4 - 6 Stunden, um die Absorption der flüssigen Antioxidationsmittel-Dicumyl-Mischung (A+B) in das Polyethylen in Granulatform zu ermöglichen und zu erleichtern,
v. Anwendung der gesinterten Filterung auf die vorbereitete flüssige Antioxidationsmittel-Dicumylperoxid-Mischung (A+B), um das Polyethylen-Granulat unter einem Druck von 4-6 bar in eine vernetzbare Struktur umzuwandeln,
vi. homogenes Dosieren des gesinterten, gefilterten flüssigen Antioxidationsmittel-Dicumylperoxid-Mischung (A+B) durch Ausstoßen des flüssigen Antioxidationsmittel-Dicumylperoxid-Mischung (A+B), das unter Verwendung von 1-3 Gewichtsprozent des Antioxidationsmittels (A) und 0,1-0, 5 Gewichtsprozent Dicumylperoxid (B) unter 2,5-5 bar Luftdruck mittels eines Zerstäubers, der sich in der Homogenisierungs- und Absorptionseinheit (4) befindet und gleichmäßig auf dem Polyethylen-Granulats, dessen Konditionierung durchgeführt wird, verteilt wird,
vii. Ergänzung der Homogenisierung durch Beförderung und Verteilung des in der Homogenisierungs- und Absorptionseinheit (4) geladenen Polyethylen-Granulats in senkrechter Richtung durch den Zyklus,
viii. Absorption der flüssigen Antioxidationsmittel-Dicumylperoxid-Mischung (A+B), die in der Zusammensetzung aus Polyethylen-Antioxidationsmittel (A) und Dicumylperoxid (B) enthalten ist, in das Polyethylen als Ergebnis der Homogenisierung, wobei ein vernetzbares Polyethylen (P) bei 40-60 °C und einem Druck von 1,5-2,0 bar für 18-22 Stunden erhalten wird, so dass das Polyethylen eine vernetzbare Struktur erhält.

2. Verfahren zur Herstellung von hoch homogenem, vernetzbarem Polyethylen (P) nach Anspruch 1, **dadurch gekennzeichnet, dass** Polyethylen, dessen Verunreinigungen eine Partikelgröße von maximal 150 µm aufweisen und dessen Verunreinigungsmenge im mitlaufenden Kontaminationstest maximal 5-10 Verunreinigungen/kg beträgt, so aufbereitet wird, dass es von seinen Verunreinigungen getrennt wird.

3. Verfahren zur Herstellung von hoch homogenem, vernetzbarem Polyethylen (P) nach Anspruch 1, **dadurch gekennzeichnet, dass** es auf 25 - 35 °C abgekühlt wird, um das Endprodukt zu verpacken, das in eine vernetzbare Produktform umgewandelt wird, deren Vernetzungsgrad (extrahierter Anteil) 20 % beträgt und deren Methanolwaschwert <140 x 10⁻⁶ mg/kg (d.h. <140 ppm) gemäß der ASTM D2765A-Methode ist.

## Revendications

1. Procédé de production de polyéthylène réticulable à haute homogénéité **caractérisé en ce qu'**il comprend les étapes de procédé suivantes;
i. réalisation d'un examen de contamination du polyéthylène produit dans le réacteur tubulaire dans une unité de contrôle de contamination en ligne (1) qui est un système automatique, fermé et étanche à la poussière, qui transmet le produit, dont la quantité de contamination est au maximum 5-10 nombre de contaminants/kg et des contaminants ayant une taille de particules maximale de 150 µm et moins, à travers une voie du système d'écoulement à 2 (deux) voies dans l'unité de séparation des contaminants (2) et en déchargeant le produit, dont l'examen de contamination est négatif, par une autre voie du système d'écoulement automatique à 2 (deux) voies hors du processus,
ii. séparation des contaminants survenus au cours du transport du polyéthylène dans l'unité de séparation des contaminants (2),
iii. transportation des granulés de polyéthylène débarrassés de leurs contaminants dans l'unité d'homogénéisation et d'absorption (4) au moyen d'un système à organe éternel se déplaçant dans une direction perpendiculaire,
iv. conditionnement des granulés de polyéthylène dans l'unité d'homogénéisation et d'absorption à 40 - 60°C pendant 4 à 6 heures afin de permettre et de faciliter l'absorption du mélange liquide antioxydant-dicumyle (A+B) dans le polyéthylène sous forme de granulés,
v. application d'une filtration frittée sur le mélange liquide antioxydant-peroxyde de dicumyle (A+B) préparé pour convertir les granulés de polyéthylène en une structure réticulable sous une pression de 4 à 6 bars,
vi. dosage de manière homogène du mélange liquide antioxydant-peroxyde de dicumyle filtré fritté (A+B) en éjectant le mélange liquide antioxydant-peroxyde de dicumyle (A+B) produit en utilisant 1 à 3 % en poids d'antioxydant (A) et 0,1 à 0, 5 pour cent de peroxyde de dicumyle (B) en poids sous 2,5-5 bars de pression d'air au moyen d'un atomiseur qui existe dans l'unité d'homogénéisation et d'absorption (4) et est réparti uniformément sur les granulés de polyéthylène dont le conditionnement est effectué ,
vii. achèvement de l'homogénéisation au moyen du transport et de la distribution de granulés de polyéthylène chargés dans l'unité d'homogénéisation et d'absorption (4) dans une direction perpendiculaire à travers le cycle,
viii. absorption du mélange liquide antioxydant-peroxyde de dicumyle (A+B) présent dans la composition polyéthylène-antioxydant (A)- peroxyde de dicumyle (B) dans du polyéthylène à la suite de l'homogénéisation, obtention d'un polyéthylène réticulable (P) à 40-60 °C sous 1,5-2,0 bar pendant 18-22 heures de manière à amener le polyéthylène à acquérir une structure réticulable.

2. Procédé de production de polyéthylène réticulable à haute homogénéité (P) selon la revendication 1, **caractérisé en ce que** le polyéthylène, dont les contaminants ayant une taille de particule maximale de 150 µm et une quantité de contamination inférieure à celle-ci est un nombre maximal de 5 à 10 contaminants/kg dans un test de contamination en ligne, est traité de manière à être séparé de ses contaminants.

3. Procédé de production de polyéthylène réticulable à haute homogénéité (P) selon la revendication 1, **caractérisé en ce qu'**il est refroidi à 25 - 35 °C de manière à emballer le produit final qui s'est transformé en une forme de produit réticulable, dont le degré de réticulation (portion extraite) est de 20 %, et dont la valeur de lavage au méthanol est <140 x 10⁻⁶ mg/kg (c'est-à-dire <140 ppm) selon la méthode ASTM D2765A.
